# EUROPÄISCHE PATENTSCHRIFT

(11) **EP 1 483 098 B1**
(45) Veröffentlichungstag und Bekanntmachung des Hinweises auf die Patenterteilung: **13.07.2005**
(21) Anmeldenummer: 03711822.1
(22) Anmeldetag: 12.02.2003
(51) Int. Cl.: B29C 45/72

(54) **SYSTEM ZUM KÜHLEN VON AN EINER TRÄGERPLATTE BEFESTIGTEN HÜLSEN**
COOLING SYSTEM FOR SLEEVES THAT ARE FIXED TO A CARRIER PLATE
SYSTEME DE REFROIDISSEMENT DE MANCHONS FIXES SUR UNE PLAQUE DE SUPPORT

(30) Priorität: 09.03.2002 DE 10210456
(43) Veröffentlichungstag der Anmeldung: 08.12.2004
(73) Patentinhaber: MHT Mold & Hotrunner Technology AG, 65239 Hochheim (DE)
(72) Erfinder: LAUSENHAMMER, Manfred, 54329 Konz-Niedermennig (DE); THÖMMES, Helmut, 54441 Kastel (DE)
(74) Vertreter: Weber, Dieter, Dr.
(86) Internationale Anmeldenummer: PCT/DE2003/000397
(87) Internationale Veröffentlichungsnummer: WO 2003/076164

(56) Entgegenhaltungen:
- EP-A- 0 283 644
- EP-A- 0 718 084
- EP-A- 0 937 566

## Beschreibung

Die Erfindung betrifft ein Kühlsystem zum Kühlen von an einer Trägerplatte befestigten Hülsen mit Hilfe eines von einem Fluideinlaß über mittels der Trägerplatte gehalterte Fluidleitungen zu einem Fluidauslaß geführten Fluids, wobei zu den Fluidleitungen Hauptversorgungs- und etwa quer zu diesen verlaufende Versorgungsleitungen gehören, welch letztere parallel zueinander und paarweise angeordnet in der Trägerplatte verlaufen und mit einer Reihe von Hülsen über Einlauf- und Auslaufleitungen verbunden sind, wobei die Reihe der Hülsen zwischen den Versorgungsleitungen eines Paares so angebracht sind, daß jede Hülse mit beiden Versorgungsleitungen verbunden ist.

Es ist bekannt, Trinkwasser in aus mehr oder weniger durchsichtigem Kunststoff, insbesondere PET bestehenden Flaschen dem Endverbraucher zuzuführen. Diese PET-Flaschen werden bekanntlich aus Vorformlingen geblasen, die ihrerseits aus dem Polyethylenterephthalat (PET) spritzgeformt sind. Die PET-Flaschen und dementsprechend die Vorformlinge aus PET werden in großer Stückzahl benötigt und mit entsprechend leistungsstarken Maschinen hergestellt. Nach dem Spritzgießen müssen die Vorformen genügend abgekühlt werden, um ohne Beschädigung der Vorformlinge ein Verarbeiten derselben nach dem Spritzvorgang zu erlauben.

Das Abkühlen erfolgt in bekannten Spritzgießmaschinen über Hülsen, die in großer Stückzahl an einer Trägerplatte befestigt sind. Solche Werkzeuge sind beispielsweise aus der EP-B2-0.283.644 bekannt. Als Fluid wird praktischerweise Kühlwasser verwendet, welches jeder Hülse durch Einlaufleitungen zugeführt und nach dem Kühlvorgang im Bereich der Hülse von dieser über Auslaufleitungen wieder abgeführt wird.

Damit die Kühlung einer großen Anzahl von Hülsen gleichzeitig in einer möglichst kompakten Maschine durchgeführt werden kann, sind Trägerplatten mit einer Mehrzahl daran befestigter Hülsen mit in der Trägerplatte verlaufenden Fluidleitungen entwickelt worden, um von einem Fluideinlaß für die ganze Trägerplatte das Kühlfluid, vorzugsweise Kühlwasser, parallel und mehr oder weniger gleichzeitig zu den Hülsen zu führen, die zum Kühlen durchströmt werden, und wieder von den Hülsen zu einem Fluidauslaß herauszuführen.

Das bekannte Kühlsystem weist die eingangs genannten Merkmale auf, die auch im Oberbegriff des unabhängigen Anspruchs 1 wiedergegeben sind.

Das bekannte Kühlsystem ist jedoch mit erheblichen Nacheilen behaftet. Obwohl die Kühlleitungen in den einzelnen Hülsen und damit auch die Einlauf- und Auslaufleitungen an den Hülsen einen kleinen Querschnitt haben, addieren sich doch bei einer größeren Anzahl von gleichzeitig zu durchströmenden Hülsen die einzelnen Leitungsquerschnitte erheblich auf. Bei einer bekannten Trägerplatte von zum Beispiel 144 Hülsen ergibt sich eine mit Kühlfluid zu versorgende Fläche von etwa 1.800 mm². Dieser Verbrauchsfläche steht eine Querschnittsfläche von nur etwa 500 mm² am Fluideinlaß gegenüber. Die zu versorgende Fläche an den Hülsen ist also mit Nachteil etwa viermal so groß wie die zur Verfügung stehende Eintrittsfläche für das Kühlfluid. Das bedeutet einen starken Druckabfall vom Fluideinlaß bis zum Hülsenauslaß, und im Bereich der Hülsen gibt es durch die infolgedessen niedrigeren Strömungsgeschwindigkeiten kaum noch Turbulenzen. Bei fehlenden Turbulenzen sinkt aber auch die Kühlwirkung stark ab. Gleichzeitig kann die Trägerplatte mit Nachteil versumpfen, weil Verunreinigungen durch die langsame Strömung und den geringen Druck in den Fluidleitungen abgesetzt und nicht weggespült werden. Der Wärmeübergang zwischen Fluideinlaß und Fluidauslaß verringert sich mit weiterem Nachteil.

Der Erfindung liegt daher die Aufgabe zugrunde, das bekannte Kühlsystem zum Kühlen von den an der Trägerplatte befestigten Hülsen gemäß den Merkmalen der eingangs erwähnten Art so zu verbessern, daß bei Vergrößerung der Fluidturbulenzen unter Verringern der Drosselwirkung größere Strömungsgeschwindigkeiten, weniger Verschmutzungsgefahr und eine größere Kühlleistung erreicht werden.

Diese Aufgabe wird gemäß der Erfindung dadurch gelöst, daß in wenigstens der einen Versorgungsleitung des Paares etwa in der Mitte ihrer Längserstreckung die Fluidverbindung unterbrochen ist. Mit anderen Worten wird die Durchflußmöglichkeit eines Fluids durch die Versorgungsleitung gesperrt. Die Wirkung ist dieselbe, als wenn zwei Versorgungsleitungen etwa gleicher Größe hintereinander vorgesehen sind. Man braucht nur an der Stelle der Versorgungsleitung, an welcher die Fluidverbindung zu unterbrechen ist, eine Sperre oder Barriere vorzusehen, um aus der einen Versorgungsleitung zwei Versorgungsleitungen zu machen, ohne daß mechanisch/physikalisch Änderungen im Aufbau der Trägerplatte notwendig wären. Durch die Zweiteilung der wenigstens einen Versorgungsleitung des Paares von Versorgungsleitungen wird für das Strömungsmuster dieses Paares von Versorgungsleitungen der ursprünglich einzige Strömungsweg in zwei Sektionen unterteilt.

Zwischen den beiden parallel zueinander verlaufenden Versorgungsleitungen eines Paares sind die Hülsen (Kühlhülsen) so angeordnet, daß eine Strömungsverbindung von der einen Versorgungsleitung über die Hülse zur anderen gegeben ist. Dies gilt für alle Hülsen. Für den Strömungsweg des Fluids bedeutet dies, daß das Fluid aus der einen Versorgungsleitung über die Hülse in die andere strömt. Im bekannten Fall gibt es keine Unterbrechung der Fluidverbindung, so daß sich das eintretende Kühlwasser stets den leichtesten Weg geringsten Widerstandes von der einen Versorgungsleitung zu der anderen sucht, damit nur diejenigen Hülsen durchströmt und kühlt, bei denen der Strömungswiderstand hinreichend klein ist. Durch die sich absetzenden Verschmutzungen in der bekannten Trägerplatte können sich nach und nach immer höhere Strömungswiderstände aufbauen mit der Folge, daß nicht mehr alle Hülsen in gewünschter Weise zum Erreichen eines Kühleffektes durchströmt werden.

Wenn erfindungsgemäß wenigstens die eine Versorgungsleitung ein Hereinströmen des frischen Fluids aus dem Fluideinlaß nur in der ersten Sektion bis zur Unterbrechung erlaubt, wird das Fluid mit Vorteil gezwungen, die Verbindungswege zu der benachbarten Versorgungsleitung des Paares (nämlich über die Hülsen) zu suchen, diesen Verbindungsweg zu durchströmen und damit eine Verschmutzung zu verhindern.

In der anderen, parallelen Versorgungsleitung angekommen, kann das Fluid dann nur in der zweiten Sektion ("hinter" - in Strömungsrichtung - der Unterbrechung der Fluidverbindung) über die erwähnten Einlauf- und Auslaufleitungen Fließwege über die Hülsen zum Fluidauslaß finden. Auch hier wird das Fluid dazu gezwungen, im Bereich der zweiten Sektion in die eine Versorgungsleitung mit der Fluidunterbrechung hineinzuströmen. Dadurch gibt es einen geringeren Druckabfall in den Fluidleitungen oder - mit anderen Worten - eine geringere Drosselwirkung. Durch die sich dadurch ergebenden größeren Strömungsgeschwindigkeiten besteht weniger eine Verschmutzungsgefahr oder gar Gefahr der Verstopfung mit der Folge, daß letztlich eine erheblich größere Kühlleistung erreicht wird.

Bei vorteilhafter weiterer Ausgestaltung der Erfindung ist für eine noch bessere Ausführungsform vorgesehen, daß zusätzlich zu der ersten Unterbrechung in der einen Versorgungsleitung des Paares auch in der anderen Versorgungsleitung des Paares die Fluidverbindung an zwei Stellen unterbrochen ist, welche jeweils der Mitte der Längserstreckung der Restleitung gegenüberliegt. Die "Restleitung" ist die verkürzte Versorgungsleitung mit der Unterbrechung. Ist zum Beispiel nur etwa in der Mitte der einen Versorgungsleitung des Paares eine Unterbrechung der Fluidverbindung vorhanden, dann ergeben sich zwei Restleitungen, nämlich - in Fließrichtung gesehen - vor und hinter der Unterbrechung. In jedem Paar befinden sich zwei parallele Versorgungsleitungen Wenn die eine Versorgungsleitung durch die Unterbrechung der Fluidverbindung in zwei Hälften geteilt ist, ergeben sich die beiden Restleitungen, die jeweils eine bestimmte Längserstreckung haben, nämlich die halbe Länge der ursprünglichen (ohne Unterbrechung) Versorgungsleitung. Im Bereich dieser Mitte der Restleitung ist dann in der benachbarten parallelen Versorgungsleitung die besagte Stelle angeordnet, an welcher die Fluidverbindung unterbrochen ist. Die zuletzt genannte Versorgungsleitung hat dann zwei Unterbrechungen; die erstgenannte bei diesem betrachteten Paar von Versorgungsleitungen nur eine Unterbrechung. Gleichwohl ist dieses Paar von Versorgungsleitungen in vier Sektionen unterteilt.

Die Einfachheit der Aufbaumittel des erfindungsgemäßen Kühlsystems ist bestechend. Erfindungsgemäß ist nämlich das Mittel zum Unterbrechen der Fluidverbindung ein Stopfen. Es ist für den Fachmann ersichtlich, daß man eine Versorgungsleitung an nahezu jeder beliebigen Stelle ihrer Erstreckung mit einem solchen Stopfen versehen kann mit der Folge, daß jegliche Fließverbindung in der betrachteten Versorgungsleitung an dieser Stelle durch den Stopfen unterbunden wird. Der Stopfen ist sozusagen eine 100%-ige Barriere oder Sperrung. Stopfen können unterschiedlich aufgebaut sein, zum Beispiel aus einem elastomeren Material oder nur teilweise aus einem elastomeren Material mit zusätzlich einem harten und beständigen Material, zum Beispiel Stahl. Es gibt zwar auch ganz aus Metall gebildete Stopfen, mit denen man auch schon bei den bekannten Trägerplatten die eine, herstellungstechnisch offene Endseite der Versorgungsleitung versperrt. Für die im Bereich der Längserstreckung der Versorgungsleitung vorgesehenen Stopfen ist es aber bevorzugt, eine Kombination von Stahl und Gummi zu verwenden, die man bekanntlich fest miteinander verbinden kann. Die Versorgungsleitungen werden nämlich bei einer bekannten Trägerplatte dadurch in diese eingelassen, daß man von einer Schmalseite der Trägerplatte die eine sogenannte Tieflochbohrung über die gesamte Breite der Platte bis nahezu zum gegenüberliegenden Ende erstellt, also eine tiefe Sackbohrung. Parallel dazu wird eine weitere Tieflochbohrung in einem solchen Abstand eingebracht, daß eine Kühlhülse dazwischen Platz hat und so angeordnet werden kann, daß eine Einlaufleitung der Hülse direkt am Rand der einen Tieflochbohrung (Versorgungsleitung) und die Auslaufleitung in gleicher Höhe in die benachbarte Tieflochbohrung (Versorgungsleitung) mündet. Über die gesamte Breite der Trägerplatte hinweg können dann viele Einlauf- und Auslaufleitungen als kleine Bohrungen vorgesehen sein, so daß man eine ganze Reihe von Hülsen, über die Breite der Trägerplatte verteilt, in der beschriebenen Weise anordnen kann.

Damit sind die erfindungsgemäßen Merkmale erreicht, daß sich die Paare der Versorgungsleitungen über nahezu die gesamte Breite der Trägerplatte erstrecken und jeweils eine Versorgungsleitung eines Paares mit jeweils einer in einem Verteiler neben der Trägerplatte untergebrachten Hauptversorgungsleitung in Fluidverbindung steht Dieser sogenannte Verteiler dient dem Verteilen des Fluid. Er wird zweckmäßigerweise neben der Trägerplatte und vorzugsweise auf deren flachen, vorzugsweise ebenen Unterseite angebracht. Man kann in den Verteiler dann Hauptversorgungsleitungen unterbringen, die einen größeren Strömungsquerschnitt haben und für die Versorgung mehrerer Versorgungsleitungen diesen können. Außerdem kann in diesem Fall von der jeweiligen Hauptversorgungsleitung eine kurze Verbindung zu den Versorgungsleitungen geschaffen werden. Von jedem Paar von Versorgungsleitungen steht also eine Versorgungsleitung mit einer Hauptversorgungsleitung in Fluidverbindung. Mit anderen Worten strömt dadurch eingangsseitig Fluid vom Einlaß über die Hauptversorgungsleitung in eine Vielzahl von paarweise angebrachten Versorgungsleitungen, nämlich durch die eine Versorgungsleitung über die Hülse zur anderen und über die andere Versorgungsleitung zum Fluidauslaß. Auslaßseitig ist ebenso eine Hauptversorgungsleitung vorgesehen und sammelt das abströmende Fluid (nach dem Kühlvorgang) zum gemeinsamen Abführen in die Ablaufleitung.

Es wurde vorstehend die eine Ausführungsform beschrieben, bei welcher in jeweils einem Paar von Versorgungsleitungen nur eine Unterbrechung der Fluidverbindung durch einen Stopfen vorgesehen ist; es wurde auch die zweite Ausführungsform als besonders bevorzugt beschrieben, bei welcher zusätzlich zu der einen Unterbrechung auch in der gegenüberliegenden Versorgungsleitung des Paares Unterbrechungen durch Stopfen erreicht sind, wobei die Stopfen jeweils auf Höhe der Mitte der Restleitung vorgesehen sind. Es wurden die dadurch erreichten vier Sektionen beschrieben.

Nun können aber auch im Rahmen der zur Verfügung stehenden Länge der jeweiligen Versorgungsleitung mehr Sektionen durch noch mehr eingebrachte Stopfen gewünscht sein. So kann zum Beispiel die eine Versorgungsleitung mit drei Stopfen und die gegenüberliegende mit zwei Stopfen derart versehen sein, daß durch die erreichten Unterbrechungen der Fluidverbindung sechs Sektionen erreicht werden. Bei großen Längen der Versorgungsleitungen, d.h. bei einer großen Breite der Trägerplatte, kann eine solche Ausführungsform sinnvoll und nützlich sein. Wenn man hingegen eine Ausführungsform wählt, bei der zwölf Hülsen in einer Reihe im Bereich eines Paares von Versorgungsleitungen versorgt werden sollen, ist die Ausführungsform mit den vier Sektionen ausreichend und sehr effektiv. Von Ausführungsform zu Ausführungsform steigt beim Einsatz von immer mehr Stopfen und dadurch Anstreben von immer mehr Sektionen die Anzahl der Stopfen (Unterbrechungen der Fluidverbindung) um jeweils geradzahlige Vielfache. Die Anzahl A der Stopfen ergibt sich also nach der Regel A = 1 + 2n, wobei n eine Zahl von null aufsteigend, zum Beispiel bis vier oder fünf ist. Für das Beispiel n = 0 wäre die Anzahl der Stopfen eins. Dies ist die erste oben beschriebene Ausführungsform, bei welcher in nur einer Versorgungsleitung jedes Paares nur eine Unterbrechung der Fluidverbindung (ein Stopfen) vorgesehen ist. Für n⁻¹ ergibt sich eine Anzahl A von drei Stepfen. Dies ist die an zweiter Stelle oben beschriebene Ausführungsform, bei welcher zusätzlich zu dem Stopfen in der einen Verlängerungsleitung gegenüber zwei weitere Stopfen in der anderen Versorgungsleitung vorgesehen sind. Dies ist die Ausführungsform mit den erreichten vier Sektionen. Weiterhin ist für n = 2 die Ausführungsform mit den fünf Stopfen und den sechs Sektionen beschrieben. Die Anzahl S der erreichten Sektionen ist stets 1 + A.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:
- Figur 1: eine teilweise abgebrochene und auseinandergezogene, perspektivische Darstellung der Trägerplatte mit Verteiler und einigen beispielsweise herausgegriffenen Hülsen, die an der Trägerplatte befestigt sind,
- Figur 2: eine Draufsicht auf die Trägerplatte, wenn man in Figur 1 von links vorn nach rechts hinten blickt, wobei allerdings nur sechs Hülsen angedeutet sind,
- Figur 3: einen vergrößert dargestellten Ausschnitt aus der Trägerplatte im Bereich oben links,
- Figur 4: eine abgebrochene Querschnittsansicht durch eine Hülse, die darunter befindliche Trägerplatte und den Verteiler, entlang dem links angedeuteten Schnitt IV-IV in Figur 2,
- Figur 5: eine Ansicht der Trägerplatte mit links vier aufgesetzten Hülsen in Blickrichtung der Figur 2 von rechts nach links entlang der Linie V-V in Figur 2 und
- Figur 6: schematisiert drei unterschiedliche Paare von Versorgungsleitungen mit unterschiedlich angebrachten Stopfen und dadurch Aufteilung der Strömungswege in zwei, vier bzw. sechs Sektionen.

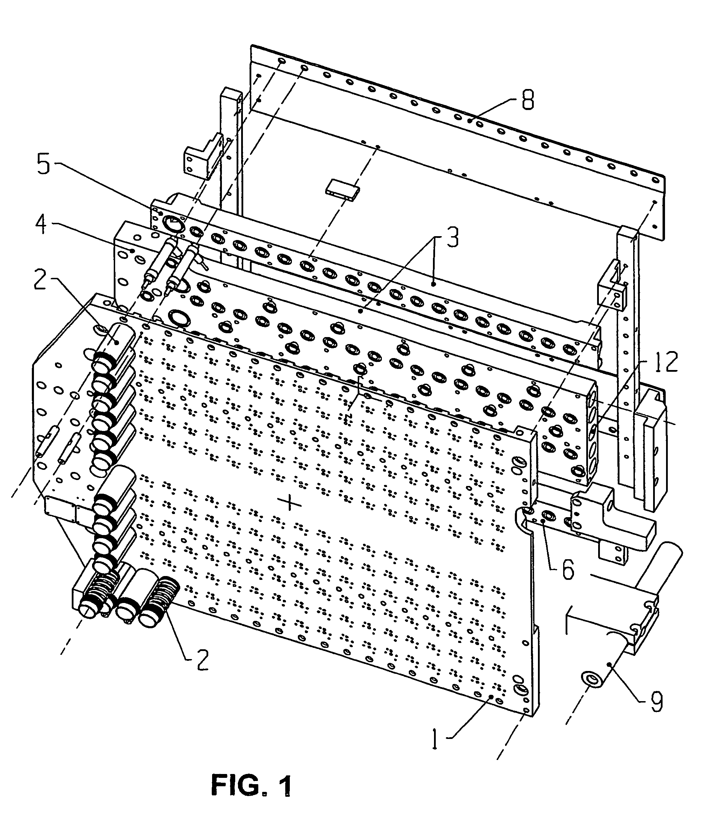

Figur 1 zeigt den gesamten Aufbau mit einer Trägerplatte 1, auf der Kühlhülsen, im folgenden Hülsen 2 genannt, befestigt sind. Auf der ebenen Rückseite der Trägerplatte 1 ist der insgesamt mit 3 bezeichnete Verteiler befestigt, dessen Mitteilteil 4 auch hier nicht weiter beschriebene Vakuumleitungen 12 führt und in dessen oberem Teil 5 sowie unterem Teil 6 je eine Hauptversorgungsleitung 7 vorgesehen ist. Die Trägerplatte 1 und der Verteiler 3 mit seinen Teilen 4 - 6 sind an dem allgemein mit 8 bezeichneten Rahmen befestigt.

Vorzugsweise steht die Trägerplatte 1 vertikal, so daß sie etwa in der in Figur 1 dargestellten Position angeordnet ist und die Schwerkraft auf das als Fluid verwendete Kühlwasser in Richtung nach unten wirkt. Entlang der Welle 9 kann die Einheit von Rahmen 8 und Trägerplatte 1 horizontal verschaben werden.

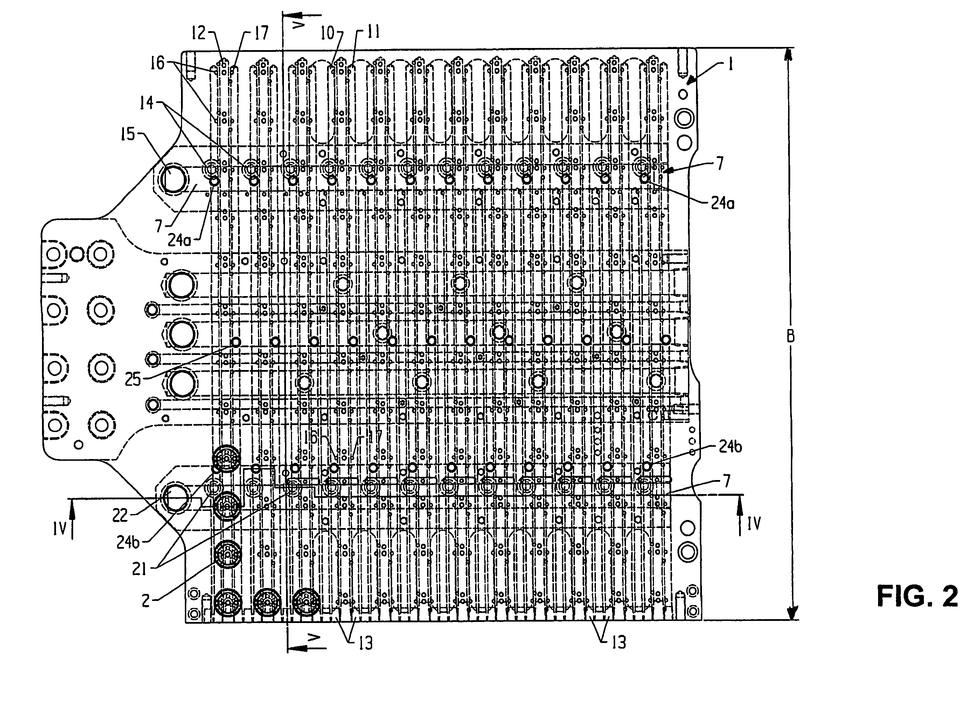

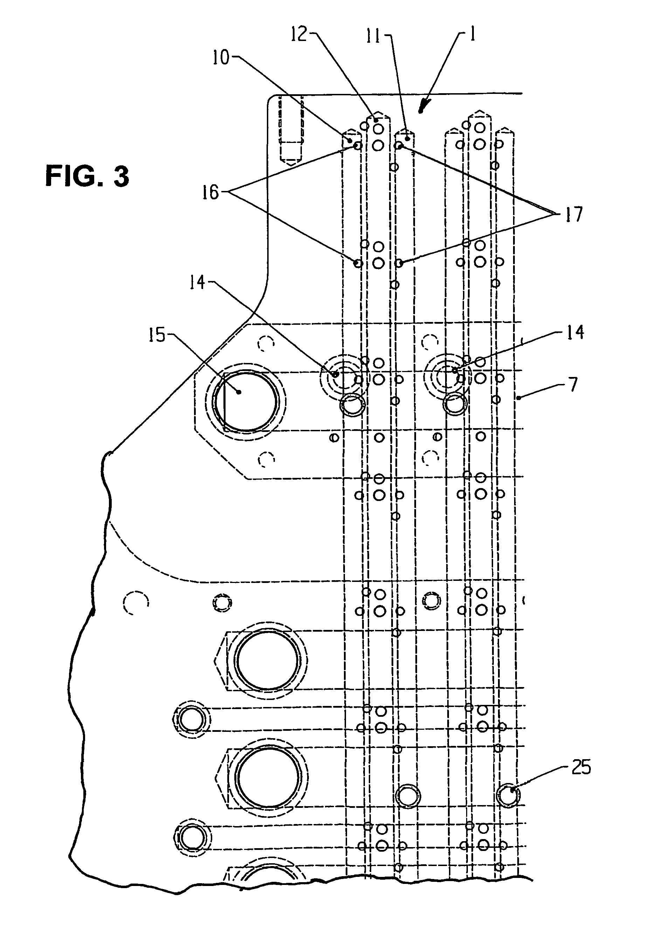

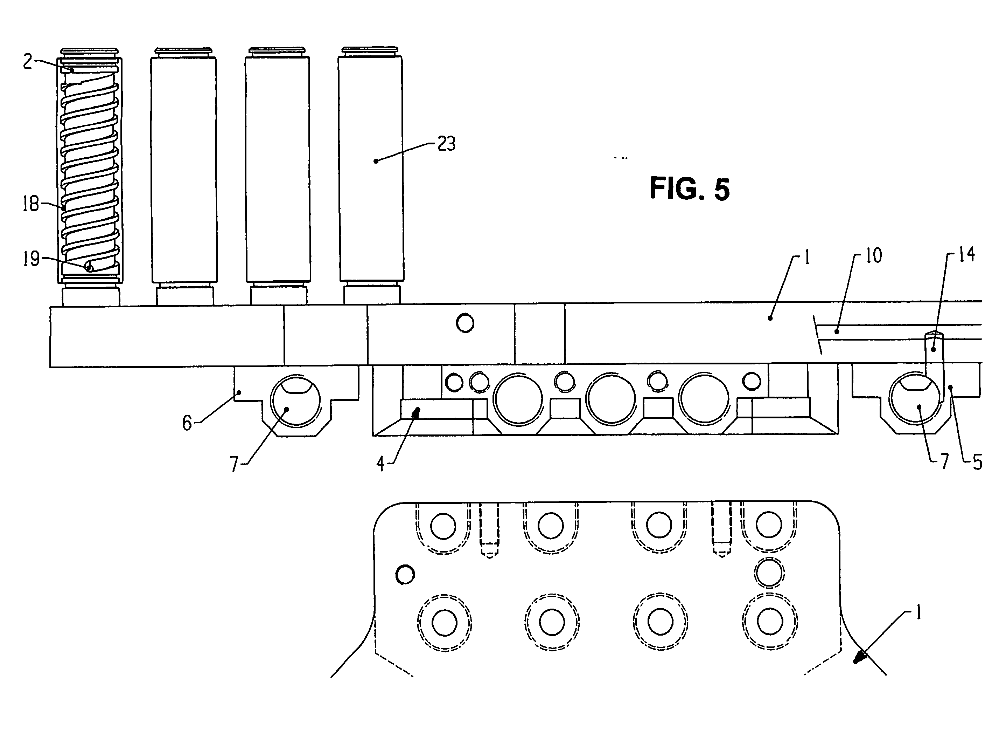

Die in Draufsicht in Figur 2 dargestellte Trägerplatte 1 hat eine Breite B, die in etwa in Figur 1 auch dargestellt ist. Bei der hier dargestellten Ausführungsform sind zwölf Paare von Versorgungsleitungen 10, 11 in Form von Tieflochbohrungen über nahezu die gesamte Breite B der Trägerplatte 1 gelegt. In den Figuren 2 und 3 befinden sich oben die geschlossenen Enden der Versorgungsleitungen 10 und 11, und in Figur 2 unten sind die offenen Enden durch Metallstopfen 13 verschlossen. Die in den Figuren 2 und 3 jeweils links angeordnete Versorgungsleitung 10 ist über die jeweilige Verbindungsbohrung 14 mit der einlaufseitigen Hauptversorgungsleitung 7 verbunden. Letztere erstreckt sich in Längsrichtung der Trägerplatte, dementsprechend in den Figuren 2 und 3 horizontal von links nach rechts bzw. umgekehrt. Die Verbindungsbohrung 14 jedes Paares verläuft von der Hauptversorgungsleitung 7 senkrecht zur Hauptebene der Trägerplatte 1 nach oben, wie in Figur 5 schematisch angedeutet ist, bis die jeweils linke Versorgungsleitung 10, welche in der Trägerplatte 1 verläuft, erreicht ist. Dort endet die Verbindungsbohrung 14. An dem jeweiligen linken äußeren Ende der Hauptversorgungsleitung 7 befindet sich der Fluideinlaß 15.

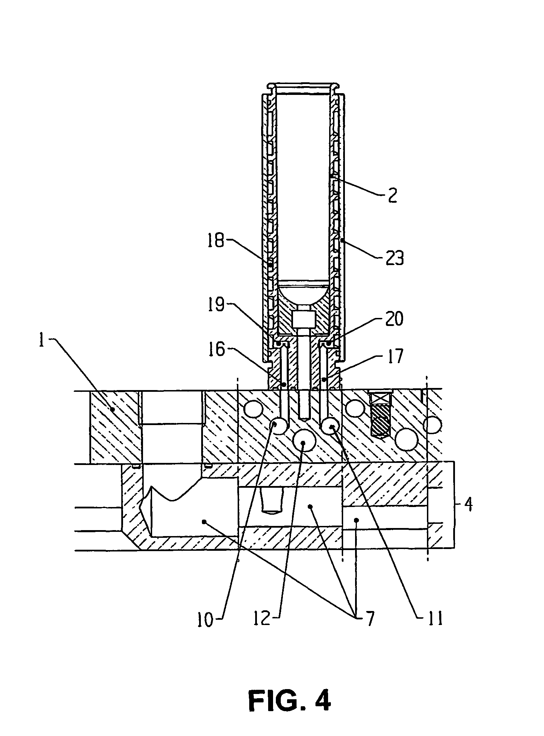

Da sich zwölf Paare von Versorgungsleitungen 10, 11 über die Länge der Trägerplatte 1 (in Figur 2 von links nach rechts oder umgekehrt) erstrecken, gibt es auch im Bereich der Hauptversorgungsleitung 7 eine Reihe von zwölf im Abstand nebeneinander angeordneten Verbindungsbohrungen 14, welche alle Versorgungsleitungen 10 mit der Hauptversorgungsleitung 7 in Fluidverbindung bringen. In ähnlich gleichem Abstand befinden sich auf der Trägerplatte 1 die erwähnten Hülsen 2, welche über Einlaufleitungen 16 und Auslaufleitungen 17 die Fluidverbindung zwischen den Versorgungsleitungen 10 und 11 herstellen. Die Fluidverbindung über die Hülse 2 ist deutlicher in Figur 4 gezeigt. Das Kühlwasser kann aus der Versorgungsleitung 10 über die Einlaufleitung 16 senkrecht zur Oberfläche der Trägerplatte 1 nach oben in die aufsteigende Spirale 18 durch den Einlauf 19 und dann spiralförmig nach oben strömen. Die Spirale ist doppelgängig, so daß der Fließweg oben von der einen Spirale in die absteigende andere Spirale umwechselt bis zu dem Auslauf 20, von wo das Kühlwasser durch die Auslaufleitung 17 in die andere (rechte) Versorgungsleitung 11 strömen kann.

Bei dem hier nicht dargestellten Stand der Technik, bei welchem es keine Stopfen und keine Unterbrechung der Fluidverbindung gibt, strömt das Kühlwasser nach dem Kühlvorgang entlang der rechten Versorgungsleitung 11 vertikal nach unten und gelangt - wie bei der Ausführungsform der hier gezeigten Erfindung - über die Auslaufleitung 17 (in Figur 2 unten) durch die Hülse in die Einlaufleitung 16 und über die linke Versorgungsleitung 10 und die auslaufseitige Verbindungsbohrung 21 in die auslaufseitige Hauptversorgungsleitung 7 (in Figur 2 unten), um aus dem Fluidauslaß 22 auszutreten.

Beim Stand der Technik sind die oberen, einlaufseitigen Verbindungsbohrungen 14 mit der einen Versorgungsleitung, zum Beispiel der linken Versorgungsleitung 10 verbunden, und die unteren oder auslaufseitigen Verbindungsbohrungen 21 sind mit jeweils der anderen, zum Beispiel der rechten Versorgungsleitung 11 verbunden. Dies ist bei der dargestellten Ausführungsform der Erfindung durch die vorhandene Unterteilung der Fluidströmungen in vier Sektionen zwar anders, die physikalischen Unterschiede sind aber so geringfügig, daß viele Anordnungen und Maße der Erfindung mit dem Stand der Technik übereinstimmen; so zum Beispiel auch der Querschnitt des Fluideinlasses 15 und des Fluidauslasses 22. Dadurch paßt die neue Trägerplatte gemäß der Erfindung auch an alte Systeme, so daß alte Systeme mit der neuartigen Kühlung verbessert werden können.

Um die Hülse 2 mit der nach außen offenen zweigängigen Spirale 18 ist eine in Figur 4 erkennbare Schutzhülle 23 angebracht, auf die man in Figur 5 bei den drei rechten Hülsen 2 von außen blickt.

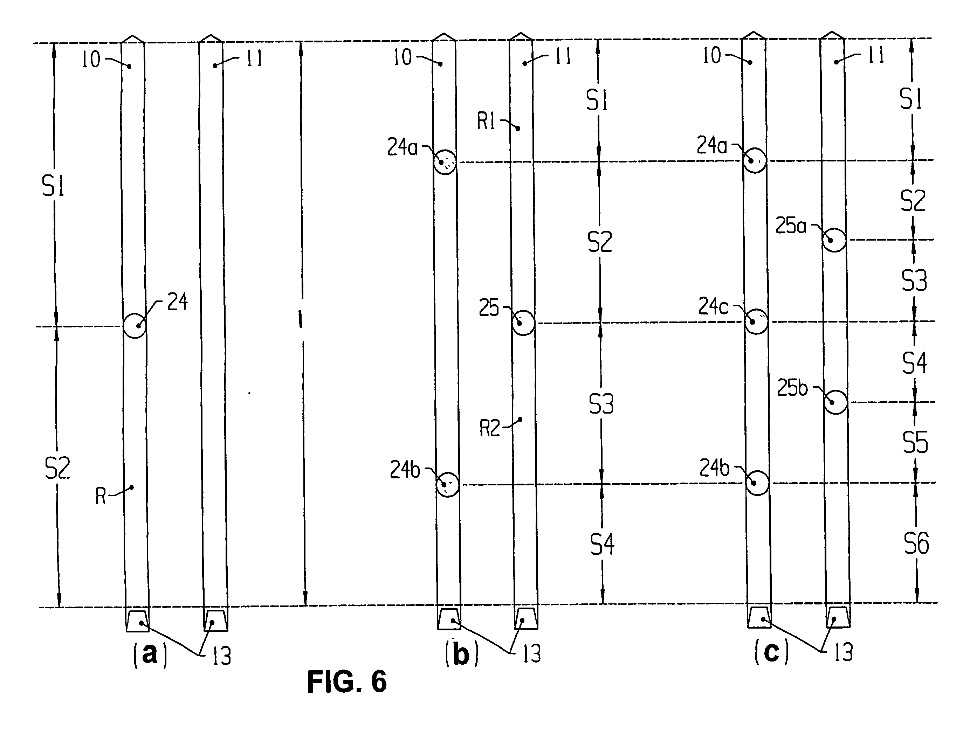

Das jeweilige Paar von Versorgungsleitungen 10 und 11 ist für drei unterschiedliche Ausführungsformen in Figur 6 gezeigt. Zwecks Vereinfachung der Darstellung ist sogar die Trägerplatte 1 weggelassen, so daß nur drei Paare von Versorgungsleitungen 10, 11 bei den drei Ausführungsformen (a), (b) und (c) dargestellt sind. Die als Tieflochbohrungen ausgeführten Versorgungsleitungen 10, 11 sind in den Figuren oben durch das Bohrungsende geschlossen und auf der gegenüberliegenden unteren Seite durch die Stopfen 13 verschlossen. Erfindungsgemäß ist bei der Ausführungsform (a) der Figur 6 in der einen, der linken Versorgungsleitung 10 des Paares die Fluidverbindung für eine etwaige Strömung von oben nach unten oder umgekehrt durch einen Stopfen 24 unterbrochen. Jede der Versorgungsleitungen 10, 11 erstreckt sich von dem oberen geschlossenen Ende über eine Längserstreckung I bis zu dem unteren Endstopfen 13. Diese Längserstreckung ist nahezu gleich groß wie die Breite B der Trägerplatte 1. Etwa auf halber Strecke befindet sich die Mitte dieser Längserstreckung I. In etwa befindet sich diese Mitte der Längserstreckung in der Trägerplatte 1 auf einer Höhe B/2. Auf dieser Höhe kann man über die ganze Länge der Trägerplatte 1 eine Linie gezogen denken, an deren Schnittpunkt mit anderen Versorgungsleitungen, zum Beispiel der Leitung 11 in der Ausführungsform (b) der Figur 6 und in der Leitung 10 der Ausführungsform (c) der Figur 6 ebenfalls eine Unterbrechung der Fluidverbindung vorgesehen ist.

Zunächst zur Ausführungsform (a) der Figur 6. Hier wird die Unterbrechung durch einen Stopfen 24 gewährleistet, welcher die linke Versorgungsleitung 10 in etwa zwei Hälften unterteilt. Da die einzigen Verbindungen zwischen den zwei Versorgungsleitungen 10 und 11 eines jeden Paares die dazwischen geschaltete Hülse 2 ist bzw. die Vielzahl von parallel zueinander geschalteten Hülsen 2, wird sämtliches mit Druck zum Beispiel in der oberen Hälfte der Versorgungsleitung 10 anstehendes Kühlwasser gezwungen, durch die Hülsen 2 in die rechte Versorgungsleitung 11 zu strömen. Diese Querströmung erfolgt in der Sektion S1. Das Druckgefälle veranlaßt das Kühlwasser zum Strömen in der Versorgungsleitung 11 nach unten und von dort über die weiteren zwischengeschalteten Hülsen 2 in die Restleitung, die untere Hälfte der linken Versorgungsleitung 10. Die Rückströmung von rechts nach links in die Restleitung R erfolgt in der unteren zweiten Sektion S2.

Gegenständlich ist insbesondere in den Figuren 1 bis 5 die schematisch in Figur 6 gezeigte Ausführungsform (b) dargestellt.

Nach der weiteren und besonders bevorzugten Ausführungsform (b) der Figur 6 ist zusätzlich zu der ersten Unterbrechung (Stopfen 25) in der einen, der rechten Versorgungsleitung 11 des Paares auch in der anderen, nämlich der linken Versorgungsleitung 10 des Paares die Fluidverbindung an zwei Stellen (Stopfen 24a, 24b) unterbrochen. Betrachtet man die rechte Versorgungsleitung 11 mit der einzigen, mittigen Unterbrechung durch den Stopfen 25, dann ergibt sich eine obere Restleitung R1 und eine untere, etwa gleich lange Restleitung R2. Beide stoßen an dem Stopfen 25 aneinander. Auf halber Länge der Längserstreckung der jeweiligen Restleitung befindet sich der Restleitung R1 bzw. R2 gegenüberliegend die Stelle 24a bzw. 24b, an welcher die Fluidverbindung der linken Versorgungsleitung 10 unterbrochen ist. Es befinden sich in der Leitung 10 also sowohl im Oberbereich ein Stopfen 24a als auch im unteren Bereich der andere Stopfen 24b. Dadurch verdoppeln sich die Fließmuster gegenüber der Ausführungsform (a) der Figur 6. Bei (b) der Figur 6 ergeben sich also vier Sektionen S1 bis S4.

Nimmt man an, daß in der linken Versorgungsleitung 10 oben das Kühlwasser einströmt, dann wechselt dieses in den oberen Teil der Restleitung R1 der rechten Leitung 11 in der Sektion S1 über. Aus dem unteren Bereich der Restleitung R1 im Bereich der Sektion S2 strömt das Kühlwasser über die nicht dargestellten Hülsen in den oberen Bereich des mittleren Abschnittes der linken Versorgungsleitung 10, nämlich zwischen den Stopfen 24a und 24b. Im unteren Bereich strömt die Kühlflüssigkeit wieder in den oberen Abschnitt der Restleitung R2 in der Sektion S3 und schließlich in der Sektion S4 zurück in den untersten Abschnitt der Versorgungsleitung 10, um von dort auszutreten.

Diese schematisch anhand der Figur 6 gezeigten Fließmuster und insbesondere die Lage der Stopfen 25 und 24a sowie 24b läßt sich konkreter an dem ausführlichen Beispiel der Ausführungsform der Figuren 1 bis 5 erhäutern.

Man erkennt in den Figuren 2 und 3 die obere Reihe der Stopfen 24a und im Abstand von zwei Sektionen wieder die zu der linken Versorgungsleitung 10 jeweils gehörende untere Reihe der Stopfen 24b. Nach Figur 2 sind in jeder Reihe zwölf Hülsen und in jeder Spalte (längs den Versorgungsleitungen 10, 11) auch zwölf Hülsen angeordnet zu denken, insgesamt als 144 Hülsen 2. Jede Hülse sitzt zwischen den zwei Versorgungsleitungen 10 und 11 und schafft den Strömungsweg von der einen Leitung 10 zur gegenüberliegenden Leitung 11. In jeder Sektion befinden sich drei Hülsen untereinander. Durch den Fluideinlaß 15 strömt Kühlwasser in die Hauptversorgungsleitung 7 und über die Verbindungsbohrung 14 nach oben in den offenen Bereich der am weitesten links in Figur 3 gezeigten Versorgungsleitung 10, um diese in der gesamten Sektion S1 zu füllen. Über die Einlaufleitungen 16 strömt das noch kühle Wasser durch die drei Hülsen und tritt über die Auslaufleitungen 17 in die rechte Versorgungsleitung 11 in der ersten Sektion S1 oben ein und füllt diese auf. Aus den Figuren 2 und 3 erkennt man, daß das Kühlwasser nach diesem ersten Kühlvorgang in der Sektion S2 (immer noch Ausführungsform (b) der Figur 6) über die nächsten drei Hülsen 2 wieder nach links in die Versorgungsleitung 10 strömt, weil sich unten in Figur 3 und auch im unteren Bereich der Figur 2 der Stopfen 25 befindet, der ein Weiterströmen des Kühlwassers in der Leitung 11 nach unten nicht gestatten würde.

Es ist jetzt nach Herunterströmen des Kühlwassers in der Versorgungsleitung 10 nach unten bis oberhalb des nächsten Stopfens 24b praktisch wieder der obige Zustand erreicht, so daß sich dasselbe Fließmuster wie oben jetzt auch in den Sektionen S3 und S4 wiederholt.

In der Sektion S4 strömt das Kühlwasser unter Durchführung des letzten Kühlvorganges von der rechten Versorgungsleitung 11 in die linke Versorgungsleitung 10 und trifft dort auf die ablaufseitige Verbindungsbohrung 21, aus der das erwärmte Kühlwasser über die Hauptversorgungsleitung 7 in den Fluidauslaß 22 und von diesem herausfließt.

Für die Ausführungsform (c) der Figur 6 erreicht man durch die Anordnung von zwei Stopfen 25a und 25b in der rechten Versorgungsleitung 11 sowie drei Stopfen 24a, 24b und 24c in der linken Versorgungsleitung 10 sechs Sektionen S1 bis S6. Das Fließmuster ist praktisch dasselbe wie bei den Ausführungsformen (a) und (b) der Figur 6. Jede Sektion ist bei jeder Ausführungsform der zum Beispiel in Figur 6 gezeigten drei Ausführungsformen gleich lang wie die anderen.

### Bezugszeichenliste

- 1: Trägerplatte
- 2: Kühlhülsen, Hülsen
- 3: Verteiler
- 4: Mittelteil
- 5: oberer Teil
- 6: unterer Teil
- 7: Hauptversorgungsleitung
- 8: Rahmen
- 9: Welle
- 10: Versorgungsleitung
- 11: Versorgungsleitung
- 12: Vakuumleitung
- 13: Metallstopfen
- 14: Verbindungsbohrung
- 15: Fluideinlaß
- 16: Einlaufleitung
- 17: Auslaufleitung
- 18: Spirale
- 19: Einlauf
- 20: Auslauf
- 21: Verbindungsbohrung
- 22: Fluidauslaß
- 23: Schutzhülle
- 24: Stopfen
- 24a: Stopfen
- 24b: Stopfen
- 24c: Stopfen
- 25: Stopfen
- 25a: Stopfen
- 25b: Stopfen
- I: Längserstreckung
- B: Breite der Trägerplatte
- B/2: Höhe der Trägerplatte.
- R: Restleitung
- R1: obere Restleitung
- R2: untere Restleitung
- S1 - S6: Sektionen

## Patentansprüche

1. Kühlsystem zum Kühlen von an einer Trägerplatte (1) befestigten Hülsen (2) mit Hilfe eines von einem Fluideinlaß (15) über mittels der Trägerplatte (1) gehalterte Fluidleitungen (7, 14, 10, 11, 21) zu einem Fluidauslaß (22) geführten Fluids, wobei zu den Fluidleitungen (7, 14, 10, 11, 21) Hauptversorgungs- (7) und etwa quer zu diesen verlaufende Versorgungsleitungen (10, 11) gehören, welch letztere parallel zueinander und paarweise angeordnet in der Trägerplatte (1) verlaufen und mit einer Reihe von Hülsen (2) über Einlauf- (16) und Auslaufleitungen (17) verbunden sind, wobei die Reihe der Hülsen (2) zwischen den Versorgungsleitungen (10,11) eines Paares so angebracht ist, daß jede Hülse (2) mit beiden Versorgungsleitungen (10, 11) verbunden ist, **dadurch gekennzeichnet, daß** in wenigstens der einen Versorgungsleitung (10) des Paares etwa in der Mitte ihrer Längserstreckung (I) die Fluidverbindung unterbrochen (24) ist.

2. Kühlsystem nach Anspruch 1, **dadurch gekennzeichnet, daß** zusätzlich zu der ersten Unterbrechung (25) in der einen Versorgungsleitung (11) des Paares auch in der anderen Versorgungsleitung (10) des Paares die Fluidverbindung an zwei Stellen (24a, 24b) unterbrochen ist, welche jeweils etwa der Mitte der Längserstreckung der Restleitung (R1, R2) gegenüberliegt.

3. Kühlsystem nach Anspruch 1oder 2, **dadurch gekennzeichnet, daß** das Mittel zum Unterbrechen der Fluidverbindung ein Stopfen (24) ist.

4. Kühlsystem nach einem der Ansprüche 1 bis 3, **dadurch gekennzeichnet, daß** sich die Paare der Versorgungsleitungen (10, 11) über nahezu die gesamte Breite (B) der Trägerplatte (1) erstrecken und jeweils eine Versorgungsleitung (10, 11) eines Paares mit jeweils einer in einem Verteiler (4) neben der Trägerplatte (1) untergebrachten Hauptversorgungsleitung (7) in Fluidverbindung steht.

## Claims

1. A cooling system for cooling sleeves (2) fixed to a carrier plate (1), by means of a fluid which is passed from a fluid inlet (15) to a fluid outlet (22) by way of fluid conduits (7, 14, 10, 11, 21) supported by means of the carrier plate (1), wherein belonging to the fluid conduits (7, 14, 10, 11, 21) are main supply conduits (7) and supply conduits (10, 11) which extend approximately transversely with respect thereto, the latter supply conduits extending in mutually parallel relationship and arranged in pairs in the carrier plate (1) and being connected to a row of sleeves (2) by way of intake (16) and discharge conduits (17), wherein the row of sleeves (2) is so disposed between the supply conduits (10, 11) of a pair that each sleeve (2) is connected to both supply conduits (10, 11), **characterised in that** the fluid communication is interrupted (24) in at least the one supply conduit (10) of the pair substantially at the middle of its longitudinal extent (I).

2. A cooling system according to claim 1 **characterised in that** in addition to the first interruption (25) in the one supply conduit (11) of the pair the fluid communication in the other supply conduit (10) of the pair is also interrupted at two locations (24a, 24b) which are each respectively in approximately opposite relationship to the centre of the longitudinal extent of the remaining conduit (R1, R2).

3. A cooling system according to claim 1 or claim 2 **characterised in that** the means for interrupting the fluid communication is a plug (24).

4. A cooling system according to one of claims 1 to 3 **characterised in that** the pairs of the supply conduits (10, 11) extend over almost the entire width (B) of the carrier plate (1) and a respective supply conduit (10, 11) of a pair is in fluid communication with a respective main supply conduit (7) disposed in a distributor (4) beside the carrier plate (1).

## Revendications

1. Système de refroidissement destiné à refroidir des manchons (2), fixés à une plaque de support (1), à l'aide d'un fluide amené d'une entrée de fluide (15) à une sortie de fluide (22) par l'intermédiaire de conduites de fluide (7, 14, 10, 11, 21) supportées par la plaque de support (1), les conduites de fluide (7, 14, 10, 11, 21) se composant de conduites d'alimentation principales (7) et de conduites d'alimentation (10, 11) qui s'étendent à peu près transversalement aux conduites d'alimentation principales et parallèlement entre elles, qui sont disposées par paires dans la plaque de support (1) et qui sont reliées à une série de manchons (2) par l'intermédiaire de conduites d'entrée (16) et de conduites de sortie (17), la série de manchons (2) étant montée entre les conduites d'alimentation (10, 11) d'une paire de sorte que chaque manchon (2) est relié à deux conduites d'alimentation (10, 11), **caractérisé en ce que**, dans au moins l'une des conduites d'alimentation (10) de la paire, à peu près au milieu de son extension longitudinale (I), la liaison pour le fluide est interrompue (24).

2. Système de refroidissement selon la revendication 1, **caractérisé en ce que**, en plus de la première interruption (25) dans l'une des conduites d'alimentation (11) de la paire, la liaison pour le fluide est également interrompue dans l'autre conduite d'alimentation (10) de la paire en deux endroits (24a, 24b) qui sont placés chacun en face du reste de conduite (R1, R2) à peu près au milieu de l'extension longitudinale.

3. Système de refroidissement selon la revendication 1 ou 2, **caractérisé en ce que** le moyen d'interruption de la liaison pour le fluide est un bouchon (24).

4. Système de refroidissement selon l'une des revendications 1 à 2, **caractérisé en ce que** les paires de conduites d'alimentation (10, 11) s'étendent à peu près sur toute la largeur (B) de la plaque de support (1) et chacune des conduites d'alimentation (10, 11) d'une paire est en liaison pour le fluide avec une conduite d'alimentation principale (7) montée dans un distributeur (4) à côté de la plaque de support (1).
